# EUROPÄISCHE PATENTSCHRIFT

(11) **EP 3 414 809 B1**
(45) Veröffentlichungstag und Bekanntmachung des Hinweises auf die Patenterteilung: **30.09.2020**
(21) Anmeldenummer: 17700933.9
(22) Anmeldetag: 13.01.2017
(51) Int. Cl.: H02H 9/06, H01T 2/02

(54) **ANORDNUNG ZUR GALVANISCH GETRENNTEN ANSTEUERUNG EINER GETRIGGERTEN FUNKENSTRECKE MIT EINSTELLUNG DER ANSPRECH- UND RESTSPANNUNG DER EINGESETZTEN FUNKENSTRECKE**
ARRANGEMENT FOR THE DC-ISOLATED CONTROL OF A TRIGGERED SPARK GAP WITH ADJUSTMENT OF THE RESPONSE AND RESIDUAL VOLTAGE OF THE SPARK GAP USED
ENSEMBLE DE COMMANDE À SÉPARATION GALVANIQUE D'UN ÉCLATEUR À ÉTINCELLE DÉCLENCHÉE AVEC RÉGLAGE DE LA TENSION D'AMORÇAGE ET DE LA TENSION RÉSIDUELLE DE L'ÉCLATEUR À ÉTINCELLE EMPLOYÉ

(30) Priorität: 10.02.2016 DE 102016001515; 29.12.2016 DE 102016125899
(43) Veröffentlichungstag der Anmeldung: 19.12.2018
(73) Patentinhaber: DEHN SE + Co KG, 92318 Neumarkt / Opf. (DE)
(72) Erfinder: EHRHARDT, Arnd, 92318 Neumarkt / Opf. (DE); BÜHLER, Klaus, 90542 Eckental (DE)
(74) Vertreter: Kruspig, Volkmar
(86) Internationale Anmeldenummer: PCT/EP2017/050625
(87) Internationale Veröffentlichungsnummer: WO 2017/137206

(56) Entgegenhaltungen:
- EP-A1- 0 933 860
- WO-A1-2015/101368
- DE-A1- 19 838 776

## Beschreibung

Die Erfindung betrifft eine Anordnung zur galvanisch getrennten Ansteuerung einer getriggerten Funkenstrecke mit Einstellung der Ansprech- und Restspannung der eingesetzten Funkenstrecke, welche zwei Hauptelektroden und mindestens eine Triggerelektrode aufweist, weiterhin die galvanische Trennung mittels eines Übertragers erfolgt sowie die Funkenstrecke mit ihren Hauptelektroden mit einer vor Überspannungsereignissen zu schützenden elektronischen Komponente in Verbindung steht, gemäß Patentanspruch 1.

Aufgrund des verstärkten Einsatzes von elektronischen Komponenten in Endgeräten oder ähnlichen Unterverteilungen besteht die Anforderung der Reduzierung des Schutzpegels von Überspannungsschutzeinrichtungen, insbesondere Blitzstromableitern. Aufgrund der dezentralen Stromversorgung steigen auch die Anforderungen an die Unempfindlichkeit der eingesetzten Überspannungsableiter gegen temporäre Netzschwankungen, gegen hochfrequente Belastungen sowie bedingt durch die Verschiebung von Bezugspotentialen und bei Netzfehlern an.

Die eingesetzte gewünschte Reduzierung der Schutzpegel bei transienten Ereignissen mit hoher Amplitude und die andererseits gewünschte Unempfindlichkeit gegenüber betriebsbedingten bzw. temporären Spannungsüberhöhungen sind an sich widersprechend und führen zu neuen Anforderungen im Bereich des Blitz- und Überspannungsschutzes.

Die Differenz zwischen der Spannung, bei welcher sich der transiente Überspannungsschutz passiv verhalten soll, und der Spannung, bei welcher ein möglichst verzugsfreies Ansprechen und ein weiterer Spannungsanstieg verhindert werden soll, unterscheidet sich nur noch geringfügig.

Es ist bekannt, als Überspannungsableiter Funkenstrecken oder Varistoren auf der Basis von Zinkoxid einzusetzen. Bei Varistoren ergibt sich bei Stromamplituden von einem oder mehreren Kiloampere ein Schutzpegel, welcher 200 bis 300 % oberhalb der Amplitude der zulässigen Haltespannung liegt. Überspannungsschutzeinrichtungen mit Funkenstrecken besitzen für niedrige Ansprechspannungen häufig eine Triggerschaltung. Eine solche Triggerschaltung basiert im Allgemeinen auf einer Reihenschaltung von Gasentladungsableitern und Varistoren. Die vorgenannten Bauteile besitzen allerdings Herstellungstoleranzen im Bereich von ± 20%. Bei den für den Bereich des Überspannungsschutzes relevanten Spannungs- und Stromsteilheiten weicht der Schutzpegel dieser Bauteile vom Nennwert ebenfalls um mehr als 100%, selbst bei verhältnismäßig geringen Strombelastungen ab.

Zusätzlich weisen bekannte Triggerschaltungen Sicherungen, Übertrager, Hilfselektroden und weitere Bauteile, geometrisch erforderliche interne und externe Verbindungen und Ähnliches auf, welche nicht unabhängig von der Funkenstrecke optimierbar sind und die bei Stromfluss aufgrund ihrer Impedanz zu einem weiteren erheblichen Spannungsabfall führen, bevor die Hauptfunkenstrecken gezündet werden und der Stromfluss über die Triggerschaltung reduziert bzw. unterbrochen wird.

Bekannte Funkenstrecken besitzen bei einem Niederspannungsnetz mit ca. 230 V Wechselspannung im Allgemeinen einen Schutzpegel von ca. 1,5 kV, obwohl die statische Ansprechspannung der Triggerschaltungen teilweise im Bereich von nur ca. 800 V liegt.

Aus dem Stand der Technik sind Maßnahmen bekannt, welche auf eine Reduzierung der Streuung der Ansprechspannungen dieser Einrichtungen abzielen. So ist der Einsatz von Suppressordioden oder aber auch von schaltenden Halbleitern ergänzend oder in Verbindung mit Gasentladungsableitern zur Reduzierung der Toleranzen bekannt.

Suppressordioden besitzen bei relativ kleinen Strömen eine geringe Restspannung bei Stromfluss in Bezug zur Haltespannung bzw. Ansprechspannung. So kann bei stromschwachen Belastungen im Bereich von mA bis wenigen A und ohne nennenswerte Alterung bzw. Streuung das Verhältnis von Ansprechspannung zu Schutzpegel bei <100 % liegen.
Bei hohen Strombelastungen im kA-Bereich, wie sie für die Zündung von Funkenstrecken notwendig sind, steigt die Restspannung stark an und es ist an sich eine sehr aufwendige Parallelschaltung zur Beherrschung der vorgenannten Ströme erforderlich.

Zusätzlich müssen bekannte Triggerschaltungen eine Koordination zu nachgeordneten Überspannungsableitern ermöglichen. Dies bedingt die zwingende Festlegung einer entsprechenden Ansprechspannung, welche niedriger als die Restspannung des Überspannungsableiters vor dessen Überlastung sein muss. Neben der Ansprechspannung muss auch die Restspannung geringer als die Restspannung des Ableiters sein, um sowohl dessen Entlastung als auch eine erforderliche Zündung der Funkenstrecke zu gewährleisten. Dies betrifft sowohl Triggerschaltungen mit Übertragern zur Erzeugung einer erhöhten Zündspannung für die Funkenstrecke als auch Funkenstrecken ohne den Einsatz einer erhöhten Zündspannung.

Bei Triggerschaltungen mit Übertragern besteht zusätzlich der Nachteil, dass zur Erzielung einer hinreichenden Triggerspannung für die Funkenstrecke auch eine Mindestromhöhe und Steilheit erforderlich ist, welche ebenfalls von den Bauteilen der Triggerschaltung und den an sich nicht festlegbaren nachgeordneten Ableitern abhängt.

Obiges führt zu einer zwanghaften Dimensionierung der Triggerschaltungen von den zu erwartenden möglicherweise eingesetzten nachgeordneten Überspannungsschutzgeräten. Da diese auf der Basis der oben erwähnten Bauteile realisiert werden, kann die gewünschte Verbesserung nicht in vollem Umfang gewährleistet und erreicht werden.

Anordnungen zur galvanisch getrennten Ansteuerung einer getriggerten Funkenstrecke sind aus WO2015/101368 A1 und EP0933860 A1 bekannt.

Es ist daher Aufgabe der Erfindung, eine weiterentwickelte Anordnung zur galvanisch getrennten Ansteuerung einer getriggerten Funkenstrecke mit Einstellung der Ansprech- und Restspannung der eingesetzten Funkenstrecke anzugeben, mit deren Hilfe es möglich ist, Überspannungsableiter mit Funkenstrecken auszubilden, bei denen sich die frequenzunabhängige Amplitude der Haltespannung, d.h. die Frequenz des passiven Verhaltens nur im Wesentlichen 30 % unterhalb der Ansprechspannung und des Schutzpegels des Ableiters bewegt.

Die Lösung der Aufgabe der Erfindung erfolgt durch eine Anordnung gemäß der Merkmalskombination nach Patentanspruch 1, wobei die Unteransprüche mindestens zweckmäßige Ausgestaltungen und Weiterbildungen umfassen.

Es wird demnach von einer Anordnung zur galvanisch getrennten Ansteuerung einer getriggerten Funkenstrecke ausgegangen, wobei die Eigenschaften der Funkenstrecke bekannt sind. Die Anordnung umfasst die Möglichkeit der Einstellung der Ansprech- und Restspannung der eingesetzten Funkenstrecke, welche zwei Hauptelektroden und mindestens eine Triggerelektrode aufweist. Weiterhin ist eine galvanische Trennung mittels eines Übertragers vorgesehen und es steht die Funkenstrecke mit ihren Hauptelektroden mit einer vor Überspannungsereignissen zu schützenden elektronischen Komponente bzw. dem Netz in Verbindung.

Erfindungsgemäß ist eine an den Hauptelektroden der Funkenstrecke angeschlossene Bypassschaltung vorgesehen, welche als Reihenschaltung passive oder aktive elektronische Bauelemente und einer Primärseite des Übertragers ausgebildet ist.

Die Sekundärseite des Übertragers führt auf einen Steuereingang eines Halbleiterschalters, welcher weiterhin zwischen einer der Hauptelektroden der Funkenstrecke und der Triggerelektrode angeordnet ist.

Zwischen der Sekundärseite des Übertragers und dem Steuereingang des Halbleiterschalters ist ein Rücksetzglied zum Wiederherstellen des Sperrzustands des Halbleiterschalters unabhängig vom Verhalten der Funkenstrecke vorgesehen.

In einer bevorzugten Ausgestaltung der Erfindung ist im Schaltungspfad zwischen einer der Hauptelektroden der Funkenstrecke und dem Halbleiterschalter ein stromflussbegrenzendes Mittel, z.B. in Form eines Widerstands angeordnet.

Das vorerwähnte Rücksetzglied besteht aus einer oder mehreren RC-Kombinationen zur Einstellung der Rücksetzzeit.

Die Sekundärseite des Übertragers steht in Verbindung mit Mitteln zur galvanisch getrennten externen Triggerung.

Die Bypassschaltung mit passiven elektronischen Elementen weist eine Reihenschaltung mindestens eines Gasableiters und mindestens eines Varistors auf, welche zur Spannungssteuerung ohmsche und kapazitive Spannungsteiler parallel geschalten sind.

Die Bypassschaltung mit aktiven elektronischen Bauelementen besitzt mindestens eine Suppressordiode, welche auf den Steuereingang mindestens eines IGBTs, eines Bipolartransistors oder eines MosFets führt, der in Reihe mit der Primärseite des Übertragers liegt, wobei die Reihenschaltung mit den Hauptelektroden der Funkenstrecke in Verbindung steht.

Wenn eine Reihenschaltung mit mehreren Suppressordioden vorgesehen ist, können diese einzeln oder in Gruppen zur Einstellung der Ansprechspannung der Funkenstrecke durch eine Schalteinrichtung überbrückt und damit aktiviert oder deaktiviert werden.

Die mit den erfindungsgemäßen Maßnahmen ertüchtigte und damit für die eingangs geschilderten besonderen Anwendungsfälle geeignete Funkenstrecke ist unabhängig von der Ansprechspannung oder Restspannung eines eingesetzten komplexen Überspannungsableiters ausbildbar. Die eingesetzten Bauteile zur Aktivierung der jeweils eingesetzten Funkenstrecke sind so ausgewählt, dass sie sich ausschließlich an den Parametern der jeweiligen Funkenstrecke orientieren. Die Ansprechspannung und die Restspannung des Ableiters sind durch den der Funkenstrecke parallel geschalteten Bypass realisiert. Die Signalabgabe zur Aktivierung der Triggerung erfolgt mit Hilfe des erwähnten Übertragers, der sich im Bypass befindet. Der Übertrager, insbesondere dessen Primärseite, weist nur eine sehr geringe Impedanz auf. Die Anzahl der Primär- und der Sekundärwindungen der jeweiligen Wicklung ist sehr gering und nahezu gleich.

Weiterhin wird dafür gesorgt, dass der Spannungsabfall aufgrund der Impedanz des Übertragers selbst bei steilen und hohen Strömen im Bypass z.B. bei 12,5 kA nur wenige Volt beträgt, so dass hieraus keine Erhöhung der Restspannung des Ableiters eintritt. Der Übertrager ist in der Lage, selbst bei Strömen von < 1 A und weitestgehend unabhängig von der Stromsteilheit ein ausreichendes Aktivierungssignal für den Triggerkreis zu geben. Sekundärseitig wird die durch den Übertrager erzeugte Spannung zur Ansteuerung mindestens eines schaltbaren Halbleiters genutzt. Die Ansteuerung erfolgt in diesem Sinne galvanisch getrennt. Der schaltbare Halbleiter ist einerseits mit dem Netz und andererseits mit dem Triggeranschluss der Funkenstrecke verbunden. Als Halbleiterschalter werden bevorzugt antiserielle Transistoren mit Freilaufdiode eingesetzt.

Zur Begrenzung des Stromflusses kann im vorgenannten Pfad des Halbleiterschalters eine Impedanz eingesetzt sein, welche als Widerstand, Kapazität, PTC-Element oder dergleichen ausgebildet sein kann. In einer Alternative besteht die Möglichkeit, eine Strombegrenzung unmittelbar durch den Halbleiter selbst vorzunehmen, nämlich über die beispielhafte Regelung der Gatespannung des Halbleiterschalters.

Das Ansteuersignal für den Halbleiterschalter im Triggerpfad der Funkenstrecke wird nach einer einstellbaren Zeit unter Zuhilfenahme eines RC-Gliedes zurückgesetzt, wodurch der Sperrzustand auch unabhängig vom Verhalten der Funkenstrecke wieder hergestellt ist.

Unabhängig von der Signalabgabe aus dem Bypass ist aufgrund der galvanischen Trennung und der geringen zur Ansteuerung erforderlichen Energie eine externe Ansteuerung realisiert. Die externe Ansteuerung steht also unabhängig von der Aktivierung des Bypasses zur Verfügung und kann zur Einbindung von externen Überspannungsschutzgeräten oder von Endgeräten genutzt werden.

Damit die Höhe und die zeitliche Belastung des Bypasses auch bei hohen transienten Impulsströmen gering bleiben, sind folgende Aspekte zu berücksichtigen.

Zunächst muss der eingesetzte Halbleiterschalter im Triggerkreis nahezu verzugsfrei bei Stromfluss im Bypass aktiviert werden. Die Abstimmung der Bauteile Übertrager, Zeitglieder und die Auswahl des Halbleiterschalters muss einerseits eine Unempfindlichkeit gegen EMV und Netzstörung realisieren und andererseits sicherstellen, dass eine Aktivierung des Halbleiterschalters innerhalb von wenigen 10 ns bis 100 ns erfolgt. nach Aktivierung des Halbleiterschalters muss es ebenso verzugsfrei zu einem Ionisierungsstrom innerhalb der Funkenstrecke zwischen der Triggerelektrode und einer der Hauptelektroden kommen. Die Hauptfunkenstrecke muss selbst bei stark begrenzten Spannungen schnell zünden.

Bevorzugt kommt als Funkenstrecke daher eine Luftfunkenstrecke mit divergierenden Hauptelektroden bei geringem Abstand und dem Einsatz einer sogenannten Plasmajettriggerung in Frage. Bei derartigen Luftfunkenstrecken ist im Bereich von Impulsströmen von mehreren kA die Zündung der Hauptfunkenstrecke innerhalb von 1 µs möglich. Neben einer sehr schnellen Zündung erfolgt bei derartigen Funkenstrecken aufgrund der geringen Lichtbogenspannung nach der Zündung eine sofortige Entlastung des Triggerzweigs und damit des Bypasses, wodurch diese unmittelbar nach der Zündung und unabhängig von weiteren Maßnahmen automatisch in den Ausgangszustand. d.h. in den Sperrzustand noch vor dem Erreichen des Scheitelwerts der üblichen Impulsströme der Wellenform 8/20 µs und 10/350 µs versetzt werden.

Die schnelle Entlastung der Hilfszweige durch die Funkenstrecke ermöglicht eine optimale Funktionsaufteilung und den Einsatz von Bauteilen mit geringem Leistungsvermögen für die vorgeschlagene Anordnung. Neben der geringen energetischen Belastung müssen die eingesetzten Bauteile in den Hilfskreisen auch kein eigenes Löschvermögen bezüglich der Anforderungen des relevanten Niederspannungsnetzes besitzen.

Die dynamische und energetische Belastung durch Impulsströme und die Löschung möglicher Netzfolgeströme wird überwiegend von der eingesetzten Funkenstrecke getragen.

Die Erfindung soll nachstehend anhand von Ausführungsbeispielen sowie unter Zuhilfenahme von Figuren näher erläutert werden.

Hierbei zeigen:
- Fig. 1: eine Darstellung eines Beispiels einer Anordnung zur galvanisch getrennten Ansteuerung einer getriggerten Funkenstrecke mit Bypass, Rücksetzschaltung und Halbleiterschaltern, welche auf die Triggerelektrode der Funkenstrecke führen, wobei der Bypass aktive Bauelemente aufweist;
- Fig. 2: eine Ausführungsform der erfindungsgemäßen Anordnung mit einer einfachen Möglichkeit zur galvanisch getrennten externen Ansteuerung über einen externen Trigger mit weiterem Übertrager;
- Fig. 3: eine Darstellung ähnlich derjenigen nach Fig. 2 mit externer Triggerung und der Möglichkeit der Einstellung der Ansprechspannung durch einmaliges oder dynamisches Brücken von einer oder mehreren eingesetzten Suppressordioden;
- Fig. 4: eine Darstellung der erfindungsgemäßen Anordnung auf der Basis des Lösungsansatzes nach Fig. 1 mit der Möglichkeit einer externen Triggerung und dem ausschließlichen Einsatz von passiven Elementen im Bypass;
- Fig. 5: den Spannungs- und Stromverlauf eines Überspannungsableiters; und
- Fig. 6: eine Veranschaulichung des Zusammenwirkens des Bypasses mit der Triggereinrichtung der Funkenstrecke bis zur Zündung des Lichtbogens zwischen den Hauptelektroden innerhalb weniger Mikrosekunden.

Bezüglich der Auslegung des Bypasses BP zur Realisierung des gewünschten niedrigen Schutzpegels bei hoher passiver Haltespannung sind mehrere Ansätze möglich.

Die maximale Stromamplitude im Bypass BP ergibt sich aus dem angestrebten limp-Wert des Ableiters. Bei einer üblichen Größe für eine Funkenstrecke von ca. 12,5 kA bis 50 kA kann bei einer Verzugszeit von < 1 µs bis zur Zündung der Funkenstrecke von einer Belastung von einem bis wenigen kA ausgegangen werden.

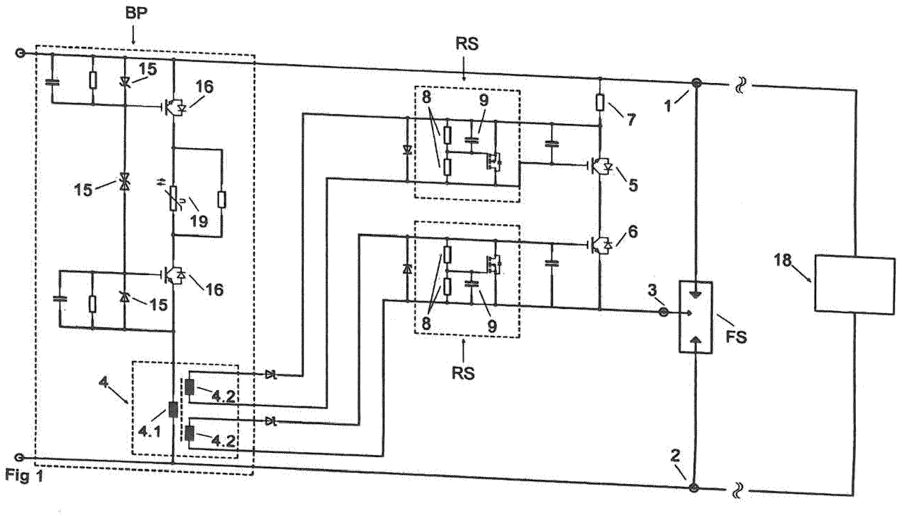

Der grundsätzliche Aufbau einer Anordnung zur galvanisch getrennten Ansteuerung einer getriggerten Funkestrecke sei anhand der Fig. 1 erläutert.

In der Fig. 1 ist der Bypass BP als eine an die Hauptelektroden 1; 2 der Funkenstrecke FS angeschlossene Reihenschaltung ausgebildet. Diese Reihenschaltung umfasst eine bzw. mehrere Suppressordioden 15 und die Primärseite 4.1 eines Übertragers 4. Die Suppressordioden stehen mit einer elektronischen Schaltung auf der Basis von z.B. IGBTs in Verbindung. Der IGBT wird zum Erreichen der Ansprechspannung der eingesetzten Dioden bzw. der Reihenschaltung im Linearbetrieb geschalten. Eine solche Aktivierung erfordert keine externe Spannungsversorgung und keinen Logikbaustein. Die sich ergebende Restspannung der Kombination aus Suppressordiode und IGBT bzw. Transistor oder MosFET liegt bei Strömen bis in den kA-Bereich deutlich unterhalb der Kennlinie der Dioden. Es ergibt sich somit eine Lösung mit einer Ansprechspannung der Dioden, wobei die Spannungsbegrenzungskennlinie einen extrem flachen Verlauf besitzt, welcher auch bei hohen Strömen des gewünschte Verhältnis zwischen Ansprechspannung und Netzspannung des Byasses sowie des gesamten Ableiters gewährleistet. Das Bezugszeichen 18 stellt den zu schützenden Verbraucher dar.

Da der eingesetzte IGBT bzw. Transistor 16 nicht im Schaltbetrieb betrieben wird, ergibt sich eine relativ hohe Verlustleistung. Um die betreffende Belastung zu begrenzen, kann ein Varistor 19 in Reihe geschalten werden. Die Bemessung des Varistors 19 erfolgt hierbei entsprechend seiner Restspannung bei dem maximal zu erwartenden Stromwert. Wird die Zündung der Funkenstrecke beispielsweise bei unterhalb 1 kA Belastung des Bypasses bewirkt, erfolgt die Dimensionierung für 1 kA. Bei diesem Strom besitzt ein Varistor z.B. vom Typ S20K95 eine Restspannung von < 320 V. Der IGBT besitzt bei einem angestrebten Schutzpegel von 800 V somit einen Regelbereich von < 480 V anstelle der sonst erforderlichen 800 V.

Bei einer beispielhaften Dimensionierung ausgehend von einer Netzspannung von 230 V Wechselstrom, einer Ansprechspannung größer als die verkettete Spannung von z.B. 440 V und einer Restspannung, d.h. bei einem Schutzpegel des Ableiters bei 25 kA bei < 800 V, dem Faktor 1,25 liegt die Ansprechspannung der eingesetzten Diode im Bereich von ca. 622 V bis < 680 V.

In den gezeigten Darstellungen ist die jeweilige Schaltung bipolar dargestellt. Die eingesetzten Transistoren 5, 6 und 16 besitzen jeweils eine Freilaufdiode. Zur Vermeidung von Störungen, beispielsweise in Folge von Ausgleichs- und Umladeströmen sind kleine Kapazitäten mit hohen Parallelwiderständen am Eingang der betreffenden IGBTs bzw. Halbleiterschalter vorgesehen. Der in der Fig. 1 gezeigte Varistor in Reihe zu den IGBTs 16 besitzt bei einer Ausführungsform einen parallelen Widerstand, welcher ihn bei längerer Belastung und kleineren Amplituden entlasten kann. Bei temporären Überspannungen, welche teilweise über der Ansprechspannung des Bypasses liegen, können so geringere Energien im Allgemeinen ohne Aktivierung der Funkenstrecke FS über einen längeren Zeitraum abgeführt werden. In diesem Fall ist es günstig, eine passive Kühlung der Halbleiterschalter bzw. des IGBTs 16 vorzusehen.

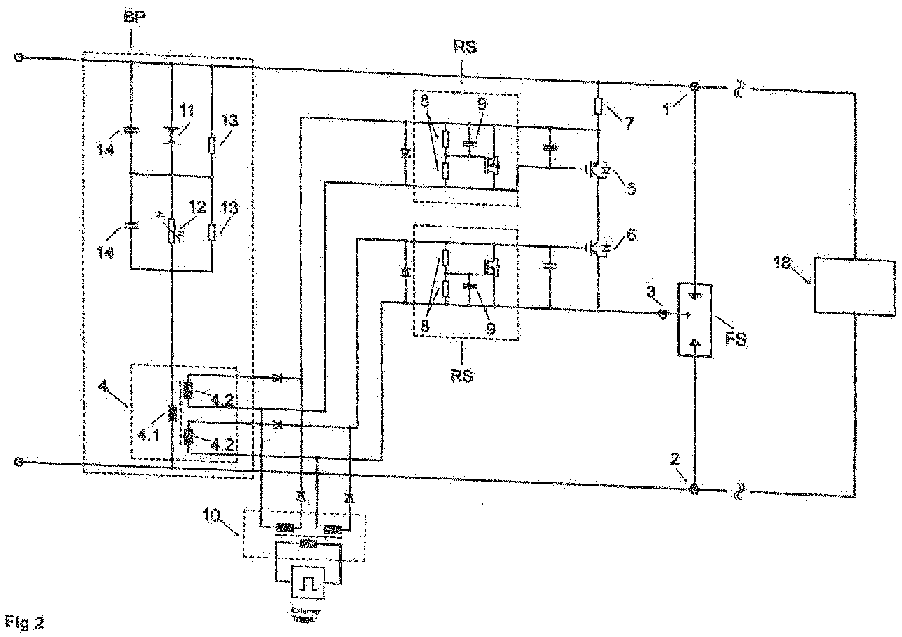

Die Fig. 2 zeigt eine erfindungsgemäße Anordnung, wobei durch Anordnung eines weiteren Übertragers 10 eine externe Triggerung unabhängig von den Wirkungen des Bypasses BP gewährleistet wird.

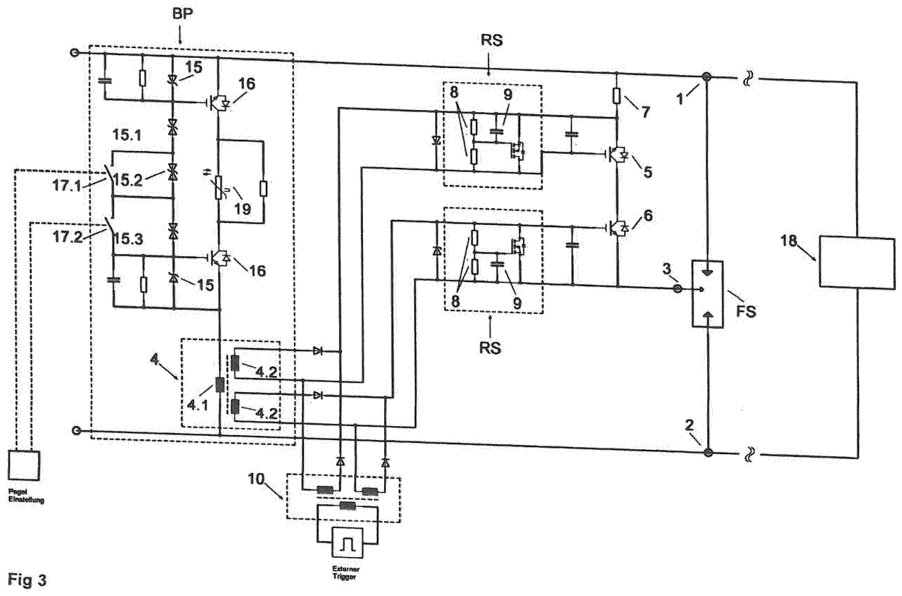

Die Fig. 3 zeigt eine Anordnung mit aktivem Bypss BP, bei welcher parallel zu einer Reihenschaltung aus 2 bis n Suppressor- bzw. Tranzorb-Dioden 15.1 bis 15.3 jeweils einen separat betätigbaren Schalter 17.1, 17.2 vorgesehen ist.

Die Anordnung nach Fig. 3 kann zur einmaligen sehr feinstufigen Einstellung zu unterschiedlichen Ansprechspannungen genutzt werden. Ein besonderer Vorteil der Lösung nach Fig. 3 ergibt sich in einer Kombination mit einer ansteuerbaren und variablen Betätigung wie Schließen oder Öffnen der Schalter 17.1 und 17.2. Dies erlaubt eine weitgehend automatische Anpassung der Ansprechspannung und auch des Schutzpegels des Ableiters in Abhängigkeit von der aktuellen Netzspannung. Eine solche automatische Einstellung kann nicht nur in Bezug auf eine Einmalanpassung an ein Netz erfolgen, sondern es kann auch eine Anpassung im Rahmen von Spannungsanpassungen im Netz oder aber auch temporären Spannungsschwankungen innerhalb weniger ms erfolgen.

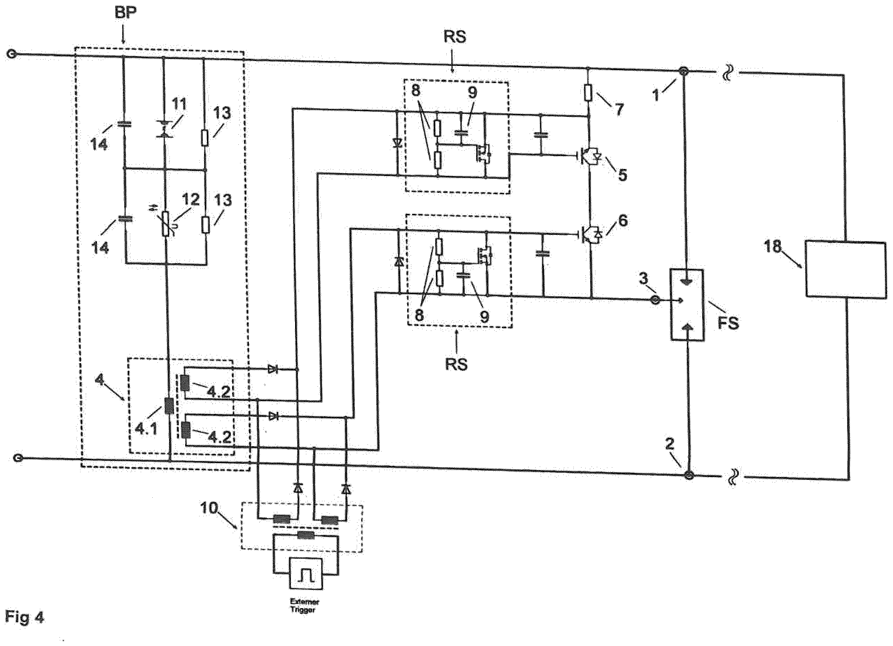

Die Anordnung mit passiven Bauteilen im Bypass BP, der als Begrenzer wirkt, wie in der Fig. 4 gezeigt, umfasst im Bypass eine Reihenschaltung eines Gasentladungsableiters 11 und einen Varistors 12. Die jeweilige Ansprechspannung des Gasentladungsableiters 11 bzw. der mA-Punkt des Varistors 12 liegt jeweils unterhalb der angestrebten minimalen Ansprech- bzw. Haltespannung, bis zu welcher sich der gesamte Ableiter passiv verhält. Damit dies umsetzbar ist, besitzt die Reihenschaltung nach Fig. 4 im Zweig BP Steuerelemente, welche sowohl bei statischen als auch dynamischen Belastungen die Spannung über den Bauteilen 11 und 12 so aufteilen, dass ein Ansprechen des Bypasses verhindert wird. Ein Ansprechen wird auch beim direkten Zuschalten der Haltespannung im Scheitelwert noch sicher vermieden. Diese Spannungssteuerung erfolgt bevorzugt mit einem ohmschen 13 und kapazitiven 14 Teiler, wobei unter Beachtung der Eigenimpedanzen des Gasentladungsableiters 11 und des Varistors 12 auch auf separate Bauteile verzichtet werden kann.

Die Schaltungsanordnung nach Fig. 4 stellt sich als besonders einfache Lösung dar, wodurch eine platzsparende und preiswerte Variante geschaffen ist.

Der Nachteil der Anordnung nach Fig. 4 bezogen auf die Anpassung an verschiedene Spannungsbereiche, welche nur aufgrund der Bauteile in bestimmten diskreten Stufen erfolgen kann, wird bei den geschilderten Lösungen mit aktivem Bypass beseitigt.

Zur Wirkung der elektronischen Schaltung, die mit den Suppressordioden in Verbindung steht, sei auf Nachstehendes verwiesen. Der angestrebte Effekt gemäß der erfindungsgemäßen Lehre beruht darauf, dass die Suppressordioden bereits bei relativ geringen Strömen eine sehr hohe, ungewünschte Restspannung aufbauen, welche mit dem angestrebten Ziel einer Ansprechspannung kleiner als der Faktor 1,3 zur Haltespannung nicht vereinbar ist. Die Leistungsfähigkeit von Suppressordioden ist zudem begrenzt, so dass trotz der Ansteuerung der Funkenstrecke bereits nach 1 µs bei den angestrebten Impulsströmen von bis zu 50 kA schon sehr große und kostenintensive Bauteile gewählt werden müssten. Um diese Nachteile zu vermeiden, werden durch die Suppressordioden nur die Halbleiterschalter 16 angesteuert, welche die Dioden sofort entlasten und eine deutlich geringere Restspannung auch bereits im angestrebten Linearbetrieb ermöglichen. Der Linearbetrieb ist gegenüber dem eigentlichen für IGBTs üblichen niederimpedanten Schalten vorteilhaft, da hierdurch auch ohne Zusatzimpedanzen der für die Zündung der Hauptfunkenstrecke notwendige Spannungsbedarf, der unter der gewünschten Restspannung der Gesamtanordnung liegt, bereitgestellt wird. Neben zusätzlichen Impedanzen entfällt bei diesem Betriebsmodus auch eine aktive Ansteuerung der IGBTs bzw. Halbleiterschalter 16 und der Aufwand des Zurücksetzens dieses Zustandes.

Die angestrebte Haltespannung kennzeichnet die Höhe der Spannung, bis zu welcher sich der gesamte Ableiter passiv verhält. Bei dem Beispiel von 230 V wird die Haltespannung oberhalb des Peakwertes der verketteten Spannung gewählt.

Die Ansprechspannung wiederum kennzeichnet die Spannung, bei welcher der Ableiter in den aktiven Modus wechseln darf. Diese Spannung muss oberhalb der Haltespannung von 622 V liegen und wird im aktiven Bypass über den Ansprechwert der Suppressordioden bestimmt. Die Höhe des Schutzpegels des Ableiters wird durch den Maximalwert der Ansprechspannung bzw. der Restspannung bestimmt. Die Höhe des Schutzpegels soll entsprechend der erfindungsgemäßen Zielstellung nicht mehr als das 1,3-fache der Haltespannung betragen. Eine beispielhafte Dimensionierung geht hierbei von einer Ansprechspannung von 622 V bis 680 V und einem Schutzpegel von 800 V aus.

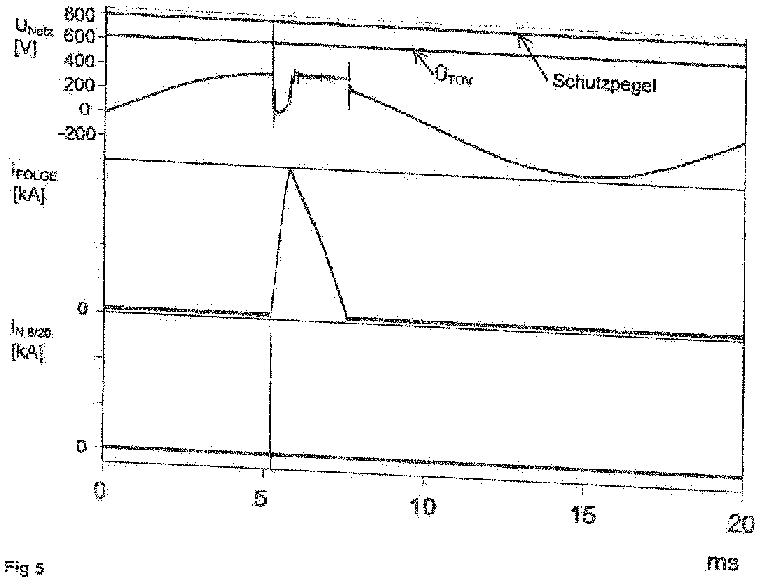

Die Fig. 5 zeigt den Spannungs- und Stromverlauf eines Überspannungsableiters. Der gezeigte Ableiter ist für eine Nennspannung von 230 V AC ausgelegt. Die Haltespannung soll oberhalb der verketteten Spannung (Peakwert von 440 V - 622 V) liegen. Der Schutzpegel des Überspannungsableiters soll bis zur Impulsstrombelastung von beispielsweise 25 kA unterhalb von 800 V liegen.

In der Darstellung nach Fig. 5 sind die Mindesthaltespannung und der Schutzpegel gezeigt. Der Schutzpegel entspricht hierbei einem Vielfachen der Mindesthaltespannung mit dem Faktor kleiner 1,3.

Der sich bei der Messung ergebende Spannungsmaximalwert der Anordnung liegt oberhalb der Haltespannung und unterhalb des Schutzpegels. Nach dem Ansprechen der Hauptfunkenstrecke sinkt die Restspannung auf wenige 10 V ab und steigt erst mit dem Einlaufen des Lichtbogens in die Löschkammer. Die Werte der Lichtbogenspannung oberhalb der Netzspannung führen zu einer raschen Löschung des Netzfolgestromes. Der Verlauf des Netzfolgestromes ist in der Fig. 5 ebenso gezeigt wie der Impulsstromverlauf.

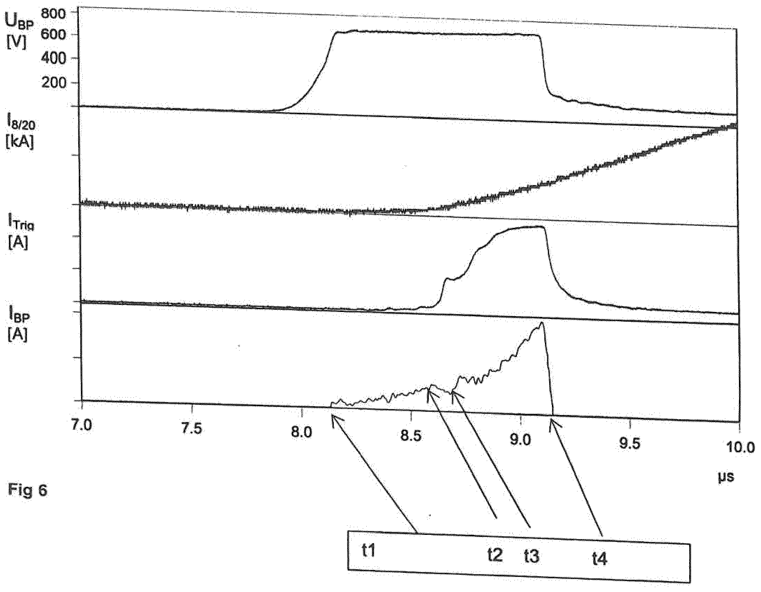

Die Fig. 6 dient der Veranschaulichung des Zusammenwirkens des Bypasses mit der Triggerschaltung der Funkenstrecke bis zur Zündung des Lichtbogens zwischen den Hauptelektroden innerhalb weniger Mikrosekunden.

Der obere Kurvenverlauf zeigt den Spannungsverlauf über den gesamten Ableiter bis zur Zündung zwischen den Hauptelektroden 1 und 2 der Funkenstrecke.

Zum Zeitpunkt t1 erreicht die Spannung über dem Überspannungsableiter die Ansprechspannung des Bypasses, zum Beispiel der Suppressordioden 15. Der Strom beginnt über den Bypass zu fließen.

In etwa zum Zeitpunkt t2 wird der Halbleiterschalter 5; 6 der Triggereinrichtung der Funkenstrecken durchgeschalten. Der Strom teilt sich nun zwischen dem Bypass und dem Triggerpfad der Funkenstrecke auf. Zum Zeitpunkt t3 führt die Plasma jetzt Triggerung der Funkenstrecke zu einem Lichtbogenüberschlag zwischen der Triggerelektrode und der Hauptelektrode 2 der Funkenstrecke, wodurch ein höherer Teilstrom in die Funkenstrecke bewirkt wird.

Die Hauptfunkenstrecke überschlägt zwischen den Hauptelektroden 1 und 2 zum Zeitpunkt t4. Der Bypass wird nach dem Zeitpunkt t3 durch die geringe Restspannung der Funkenstrecke zu diesem Zeitpunkt vollständig entlastet. Der Strom kommutiert sehr rasch vollständig auf die Funkenstrecke. Die Restspannung der Funkenstrecke liegt deutlich unterhalb der Ansprechspannung bzw. Haltespannung des Bypasses.

Es ist der Fig. 6 zu entnehmen, dass der Schutzpegel des Überspannungsableiters nahezu ausschließlich durch den Bypass bestimmt wird. Die rasche Entlastung des Bypasses durch die Funkenstrecke ermöglicht eine extrem leistungsarme Auslegung der entsprechenden Bauteile des Bypasses, was zu geringeren Kosten führt.

Die Fig. 6 zeigt in den oberen Kurven noch den Verlauf der Ansprech- und Restspannung des Ableiters, den Verlauf der Impulsstrombelastung, wie den Verlauf des Stromes im Triggerzweig (Bauteile 5; 6 zur Triggerelektrode 3) und den Verlauf des Stromes im Bypass des Ableiters.

## Patentansprüche

1. Anordnung zur galvanisch getrennten Ansteuerung mit einer getriggerten Funkenstrecke (FS) und Einstellung der Ansprech- und Restspannung der eingesetzten Funkenstrecke (FS), welche zwei Hauptelektroden (1; 2) und mindestens eine Triggerelektrode (3) aufweist, weiterhin mit einem Übertrager (4) zur galvanischen Trennung, wobei die Funkenstrecke (FS) mit ihren Hauptelektroden (1; 2) mit einer vor Überspannungsereignissen zu schützenden elektronischen Komponente in Verbindung steht, wobei weiterhin eine an den Hauptelektroden (1; 2) der Funkenstrecke (FS) angeschlossene Bypassschaltung (BP) vorgesehen ist, welche als Reihenschaltung passiver oder aktiver elektronischer Bauelemente und einer Primärseite (4.1) des Übertragers (4) ausgebildet ist, eine Sekundärseite (4.2) des Übertragers (4) auf den Steuereingang eines Schalters führt, welcher weiterhin zwischen einer der Hauptelektroden (1) der Funkenstrecke (FS) und der Triggerelektrode (3) angeordnet ist,
**dadurch gekennzeichnet, dass**
der Schalter als Halbleiterschalter (5; 6) ausgebildet ist und die Sekundärseite (4.2) des Übertragers (4) mit Mitteln (10) zur galvanisch getrennten externen Triggerung in Verbindung steht.

2. Anordnung nach Anspruch 1,
**dadurch gekennzeichnet, dass**
zwischen der Sekundärseite (4.2) des Übertragers und dem Steuereingang des Halbleiterschalters (5; 6) ein Rücksetzglied (RS), ausgebildet als eine RC-Kombination (8; 9) zur Einstellung der Rücksetzzeit sowie zum Wiederherstellen des Sperrzustands des Halbleiterschalters (5; 6) unabhängig vom Verhalten der Funkenstrecke (FS) vorgesehen ist.

3. Anordnung nach Anspruch 1 oder 2,
**dadurch gekennzeichnet, dass**
im Schaltungspfad zwischen einer der Hauptelektroden (1) der Funkenstrecke (FS) und dem Halbleiterschalter (5) ein stromflussbegrenzendes Mittel (7) vorgesehen ist.

4. Anordnung nach einem der vorangegangenen Ansprüche,
**dadurch gekennzeichnet, dass**
die Bypassschaltung (BP) mit passiven elektronischen Bauelementen eine Reihenschaltung eines Gasableiters (11) und eines Varistors (12) aufweist, welcher zur Spannungssteuerung ohmsche (13) und kapazitive (14) Teiler parallel geschalten sind.

5. Anordnung nach einem der Ansprüche 1 bis 3,
**dadurch gekennzeichnet, dass**
die Bypassschaltung (BP) mit aktiven elektronischen Bauelementen mindestens eine Suppressordiode (15) aufweist, welche auf den Steuereingang mindestens eines IGBTs, Bipolartransistors oder MosFETs (16) führt, der einerseits mit der Primärseite (4.1) des Übertragers (4) und andererseits mit einer der Hauptelektroden (1) der Funkenstrecke (FS) in Verbindung steht.

6. Anordnung nach Anspruch 5,
**dadurch gekennzeichnet, dass**
die Reihenschaltung mehrere Suppressordioden (15.1 bis 15.3) aufweist, welche einzeln oder in Gruppen zur Einstellung der Ansprechspannung der Funkenstrecke (FS) in Abhängigkeit von der aktuellen Netzspannung durch eine Schalteinrichtung (17.1; 17.2) überbrückbar sind.

7. Anordnung nach Anspruch 5 oder 6,
**dadurch gekennzeichnet, dass**
der IGBT, der Bipolartransistor oder der MOSFET (16) im Linearbetrieb beschalten sind.

## Claims

1. An arrangement for the galvanically isolated control with a triggered spark gap (FS) and adjustment of the response and residual voltage of the spark gap (FS) used, which arrangement has two main electrodes (1; 2) and at least one trigger electrode (3), furthermore with a transformer (4) for the galvanic isolation, wherein the spark gap (FS) is connected with its main electrodes (1; 2) to an electronic component to be protected from overvoltage events, wherein furthermore a bypass circuit (BP) connected to the main electrodes (1; 2) of the spark gap (FS) is provided which is formed as a series circuit of passive or active electronic components and a primary side (4.1) of the transformer (4), a secondary side (4.2) of the transformer (4) leads to a control input of a switch which is further arranged between one of the main electrodes (1) of the spark gap (FS) and the trigger electrode (3),
**characterized in that**
the switch is formed as a semiconductor switch (5; 6), and the secondary side (4.2) of the transformer (4) is connected to means (10) for galvanically isolated external triggering.

2. The arrangement according to claim 1,
**characterized in that**
a reset element (RS) formed as an RC combination (8; 9) for setting the reset timing and restoring the off-state of the semiconductor switch (5; 6) independently of the behavior of the spark gap (FS) is provided between the secondary side (4.2) of the transformer (4) and the control input of the semiconductor switch (5; 6).

3. The arrangement according to claim 1 or 2,
**characterized in that**
a current flow-limiting means (7) is provided in the circuit path between one of the main electrodes (1) of the spark gap (FS) and the semiconductor switch (5).

4. The arrangement according to anyone of the preceding claims,
**characterized in that**
the bypass circuit (BP) including passive electronic components comprises a series circuit of a gas arrester (11) and a varistor (12) to which resistive (13) and capacitive (14) dividers are connected in parallel for controlling the voltage.

5. The arrangement according to anyone of the claims 1 to 3,
**characterized in that**
the bypass circuit (BP) including active electronic components comprises at least one suppressor diode (15) which leads to the control input of at least one IGBT, bipolar transistor or MOSFET (16), which is connected to the primary side (4.1) of the transformer (4), on the one hand, and to one of the main electrodes (1) of the spark gap (FS), on the other.

6. The arrangement according to claim 5,
**characterized in that**
the series circuit comprises several suppressor diodes (15.1 to 15.3) which can be bridged individually or in groups for setting the response voltage of the spark gap (FS) in dependence of the actual mains voltage by a switching device (17.1; 17.2).

7. The arrangement according to claim 5 or 6,
**characterized in that**
the IGBT, the bipolar transistor or the MOSFET (16) are switched in the linear mode.

## Revendications

1. Ensemble pour la commande galvaniquement séparée d'un éclateur déclenché (FS) et pour le réglage de la tension de réaction et de la tension résiduelle de l'éclateur (FS) utilisé, comportant deux électrodes principales (1 ; 2) et au moins une électrode de déclenchement (3), et présentant en outre un transmetteur (4) pour la séparation galvanique,
dans lequel
l'éclateur (FS) est relié par ses électrodes principales (1 ; 2) à un composant électronique à protéger contre les événements de haute tension, et
il est prévu en outre un circuit de dérivation (BP) relié aux électrodes principales (1 ; 2) de l'éclateur (FS), qui est réalisé sous forme de circuit en série de composants électroniques passifs ou actifs et un côté primaire (4.1) du transmetteur (4), un côté secondaire (4.2) du transmetteur (4) mène vers l'entrée de commande d'un commutateur qui est en outre disposé entre l'une des électrodes principales (1) de l'éclateur (FS) et l'électrode de déclenchement (3),
**caractérisé en ce que**
le commutateur est réalisé sous forme de commutateur semi-conducteur (5 ; 6), et le côté secondaire (4.2) du transmetteur (4) est en liaison avec des moyens (10) destinés au déclenchement externe galvaniquement séparé.

2. Ensemble selon la revendication 1,
**caractérisé en ce que**
un élément de remise à zéro (RS) est prévu entre le côté secondaire (4.2) du transmetteur et l'entrée de commande du commutateur semi-conducteur (5 ; 6), qui est réalisé sous forme de combinaison RC (8 ; 9) pour régler le temps de remise à zéro et pour rétablir l'état de blocage du commutateur semi-conducteur (5 ; 6) indépendamment du comportement de l'éclateur (FS).

3. Ensemble selon la revendication 1 ou 2,
**caractérisé en ce que**
un moyen de limitation du flux de courant (7) est prévu dans le chemin de commutation entre l'une des électrodes principales (1) de l'éclateur (FS) et le commutateur semi-conducteur (5).

4. Ensemble selon l'une des revendications précédentes,
**caractérisé en ce que**
le circuit de dérivation (BP) à composants électroniques passifs comporte un circuit en série d'un dérivateur à gaz (11) et d'une varistance (12), qui sont connectés en parallèle pour la commande de la tension des parties résistives (13) et capacitives (14).

5. Ensemble selon l'une des revendications 1 à 3,
**caractérisé en ce que**
le circuit de dérivation (BP) à composants électroniques actifs comporte au moins une diode de suppression (15) qui mène vers l'entrée de commande d'au moins un IGBT, d'un transistor bipolaire ou d'un MOSFET (16) qui est relié d'une part au côté primaire (4.1) du transmetteur (4) et d'autre part à l'une des électrodes principales (1) de l'éclateur (FS).

6. Ensemble selon la revendication 5,
**caractérisé en ce que**
le circuit en série comporte plusieurs diodes de suppression (15.1 à 15.3) qui peuvent être pontées individuellement ou en groupe par un dispositif de commutation (17.1 ; 17.2) afin de régler la tension de réaction de l'éclateur (FS) en fonction de la tension actuelle du réseau.

7. Ensemble selon la revendication 5 ou 6,
**caractérisé en ce que**
l'IGBT, le transistor bipolaire ou le MOSFET (16) sont câblés en mode linéaire.
